# EUROPEAN PATENT APPLICATION

(11) **EP 2 006 762 A2**
(43) Date of publication of application: **24.12.2008**
(21) Application number: 08104309.3
(22) Date of filing: 09.06.2008
(51) Int. Cl.: G06F 3/033

(54) **System and method of using sudden motion sensor data for keyboard input**

(30) Priority: 20.06.2007 US 945103 P; 10.08.2007 US 836793
(71) Applicant: Information Appliance Associates, San Diego CA 92101 (US)
(72) Inventor: Goggin, Terence, San Diego, CA 92101 (US); Goggin, Mark, San Diego, CA 92101 (US)
(74) Representative: 2K Patentanwälte Kewitz & Kollegen

(57) **Abstract**

A system and method effect application behavior by interpreting sudden motion sensor data as input device (e.g., keyboard) input data

## Description

### PRIORITY REFERENCE TO PRIOR APPLICATIONS

This application claims benefit of and incorporates by reference U.S. Patent Application serial number 60/945,103, entitled "SMS Sensor Keyboard Input," filed on June 20, 2007, by inventors Terence Goggin et al.

### Technical Field

This invention relates generally to sudden motion sensor (SMS) data, and more particularly, but not exclusively, provides a system and method for using sudden motion sensor data for substituting keyboard or other input device input.

### Background

Recently, Apple began shipping laptops that included a new piece of hardware known as a Sudden Motion Sensor, or SMS. The SMS can detect sudden acceleration of or a significant collision with the laptop.

According to a Wikipedia article on the SMS as of the time of writing:
With a triaxial accelerometer, the system detects sudden acceleration, such as when the computer is dropped, and prepares the relatively-fragile hard disk drive mechanism for impact. The system disengages the disk drive heads from the hard disk platters, preventing data loss and drive damage from a disk head crash. When the computer is stable, the drive operates normally again.
Broadly speaking, there have been two types of Sudden Motion Sensor. The sensor used in the G4-based laptops resolved approximately 52 counts per gravity, while the sensor used in the current Intel-based laptops resolves about 250 counts per gravity. In at least one model of Intel-based laptop, the MacBook Pro 15", Apple uses the Kionix KXM52-1050 three-axis accelerometer chip, with dynamic range of +/- 2g and bandwidth up to 1.5 KHz. [...]
As of October 2006, Apple has not documented the API for the device, and its characteristics vary from model to model. [...]
IBM has an analogous system, the Active Protection System, found in some Thinkpads starting in 2003.
Acer has a similar system, known as GraviSense, found in some TravelMate-series notebooks manufactured in 2006.

The intended purpose of the SMS is to protect the hard drive in the event that the laptop is, for example, dropped or knocked off a table. On the surface, the SMS just seems to be a solid engineering concept. However, others have been using the SMS for other purposes.

The Macintosh community has already begun to experiment with less serious user-input uses of the SMS. Most of these arc cantered on demonstrating the SMS Sensor's purpose and use.
- The SiesMac project uses the SMS Sensor to turn the user's Mac into a makeshift seismograph.
- The MacSaber project causes the Mac to make Star Wars light-saber-like sounds based on the movement of the Mac.
- Apple itself has applied for a patent (United States Patent Application Publication No. 20050190059) on a security system based on acceleration.
- Similarly, the MultiAlarm application uses the SMS Sensor as a security system, emitting a high-pitched noise if the Mac is moved without permission or warning.
   Some SMS applications are loosely game-oriented:

- Bubblegym uses the SMS as a means of providing tilt-related feedback to the game. That is, the object is to tilt the Mac in such a way as to cause various items in the game to roll into slots, etc.
- Analog Laptop Extension uses the tilt again, but this time as a means of controlling a virtual marionette puppet.
- The one product, SkipChecker, that docs treat SMS Sensor data as percussive in nature is not at all a game. Rather, this is used as a tool to operate Apple's iTunes application. That is, a tap or bump on the Mac causes the Skip Checker application to make iTunes skip to the next track.

As such, none of the conventional applications of SMS use the SMS data substitute keyboard input.

### SUMMARY

A system and method to input keyboard data via tilting of a device is provided. The tilting is measured by a sudden motion sensor used to park a hard disk drive head during sudden movement.

In an embodiment, the method comprises: reading sudden motion sensor data during tilting of a device; interpreting the read data as input device input; and adjusting application behavior based on the interpreted data.

In an embodiment, the system comprises: a sudden motion sensor engine; an input device driver; and an application. The sudden motion sensor engine reads sudden motion sensor data during tilting of a device. The input device driver, which is communicatively coupled to the sudden motion sensor engine, interprets the read data as input device data. The application, which is communicatively coupled to the input device driver, adjusts its behavior based on the interpreted data.

### BRIEF DESCRIPTION OF THE DRAWTYGS

Non-limiting and non-exhaustive embodiments of the present invention are described with reference to the following figures, wherein like reference munerals refer to like parts throughout the various views unless otherwise specified.
FIG. 1 is a block diagram illustrating a system in accordance with a first embodiment of the present invention;
FIG. 2 is a block diagram illustrating a persistent memory of the system;
FIG. 3 is a flowchart illustrating a method of generating SMS calibration and motion threshold data;
FIG. 4 is a flowchart illustrating a method of using SMS data as a substitute for keyboard input data; and
FIG. 5 is a diagram illustrating a game according to an embodiment of the invention.

### DETAILED DESCRIPTION OF THE ILLUSTRATED EMBODIMENTS

The following description is provided to enable any person having ordinary skill in the art to make and use the invention, and is provided in the context of a particular application and its requirements. Various modifications to the embodiments will be readily apparent to those skilled in the art, and the principles defined herein may be applied to other embodiments and applications without departing from the spirit and scope of the invention. Thus, the present invention is not intended to be limited to the embodiments shown, but is to be accorded the widest scope consistent with the principles, features and teachings disclosed herein.

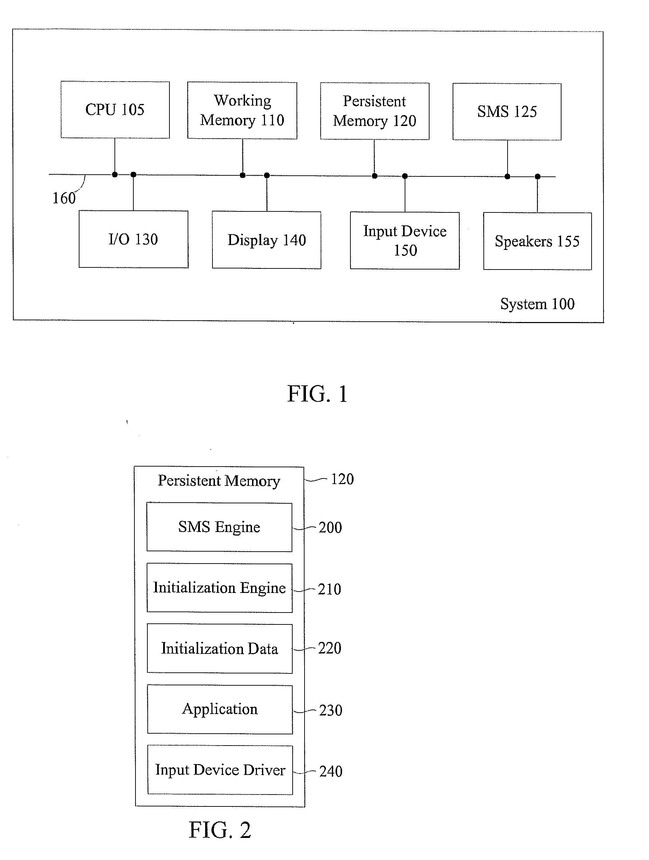

FIG. 1 is a block diagram illustrating a system 100 in accordance with a first embodiment of the present invention. In an embodiment of the invention, the system 100 includes a MACINTOSH laptop computer. In another embodiment of the invention, the system 100 includes any device having a processor and SMS, such as a wireless phone, personal digital assistant, MP3 player, etc.

The system 100 includes a central processing unit (CPU) 105; a working memory 110; a persistent memory 120; a SMS 125; an input/output (I/O) interface 130; a display 140; an input device 150; and speakers 155 all communicatively coupled to each other via a bus 160. The CPU 105 may include an INTEL XEON microprocessor, a Motorola POWERPC microprocessor, or any other processor capable to execute software stored in the persistent memory 120. The working memory 110 may include random access memory (RAM) or any other type of read/write memory devices or combination of memory devices. The persistent memory 120 may include a hard drive, read only memory (ROM) or any other type of memory device or combination of memory devices that can retain data after the system 100 is shut off. The SMS 125, as described above, includes an accelerometer that generates data relating to sudden motion (e.g., sudden acceleration). In an embodiment, the 110 interface 130 is communicatively coupled, via wired or wireless techniques, to a network, such as the Internet. The display 140 may include a flat panel display, cathode ray tube display, or any other display device, The input device 150, may include a keyboard, mouse, touch screen or other device for inputting data, or a combination of devices for inputting data. The speakers 155, which are optional like other components of the invention, emit sound in mono or stereo.

In an embodiment of the invention, the system 100 may also include additional devices, such as network connections, additional memory, additional processors, LANs, input/output links for transferring information across a hardware channel, the internet or an intranet, etc. One skilled in the art will also recognize that the programs and data may be received by and stored in the system 100 in alternative ways.

During operation of the system 100, data from the SMS 125 is used to replace or add input device 150 input on the system 100. For example, in a Tetris game embodiment, tilting the system 100 such that a right side is higher than a left side would be interpreted as pressing a left arrow key of the input device 150 or moving a mouse of the input device 150 leftwards, thereby moving a block to the left. Tilting the system 100 such that a left side is higher than a right side would be interpreted as pressing a right arrow key of the input device 150, thereby moving a block to the right.

FIG. 2 is a block diagram illustrating a persistent memory 120 of the system 100. The memory 120 includes an SMS engine 200; an initialization engine 210; initialization data 220; an application 230; and an input device driver 240. The SMS engine 200 reads data from the SMS 125 and feeds it to other software, such as the initialization engine 210 and the input device driver 240. The initialization engine 210 sets up calibration and motion threshold data, which is stored as initialization data 220.

Data from the SMS 125 comes in the form of three values for each of the three axes in which the SMS 125 measures movement. In other embodiments, there may be only one or two values for a one or two-axis accelerometer. The first step in making sense of these three numeric values is to determine the base level, as there is always some small movement being detected - motion from the hard drive itself, perhaps a CD ROM drive, a keyboard being typed on, etc. To determine the base level or calibration points, the initialization engine 210 can ask the user to simply ensure that the laptop is on a stable surface, and then take a reading of the values from the SMS 125.

Additionally, the initialization engine 210 might ask the user to tilt the system 100 with the same force they'll likely use when operating the application later. The difference between the "at rest" readings and the "sample tilt" readings is the threshold that later tilt input must pass in order to cause input to the input device driver 240. Alternatively, a default threshold value can be used independent of any measurements and calculations by the initialization engine 210. The threshold value can include 3 values (one per axis) or a single value (e.g., an identical minimum for each axis or a minimum that a measurement in one of three axes must exceed) or two values (e.g., x and y axis values).

The initialization data 220 includes the threshold value(s) as discussed above and, in one embodiment, the calibration data from when the system 100 is at rest. In an embodiment of the invention, the initialization data 220 further includes a maximum value(s) in which keyboard input is not accepted if a read SMS value exceeds the maximum value(s). This has the effect of encouraging users not to move the system 100 in a manner that could cause damage to the system 100.

The application 230 includes any application that uses input device 150 input. The application 230 can include a game that accepts keyboard input. The input device driver 240 is a driver for the input device 150 that converts physical input to data for use by the application 230. In an embodiment, the SMS engine 200 feeds the SMS data to the input device driver 240 so that the input device driver 240 interprets the SMS data for use by the application 230.

During application 230 operation, the SMS engine 200 continuously reads the constantly changing SMS data from the SMS 125; in one embodiment, every so many fractions of a second. The SMS engine 200 then compares the SMS data to threshold data, and if the SMS data exceeds the threshold data, then feeds the data to the input device driver 240, which interprets it as keyboard input. The device driver 240 then feeds the data to the application 230, which uses the data accordingly. In an embodiment, the SMS engine 200 checks for a maximum value and if the SMS data exceeds the maximum value, the SMS engine 200 does not feed the data to the input device driver 240.

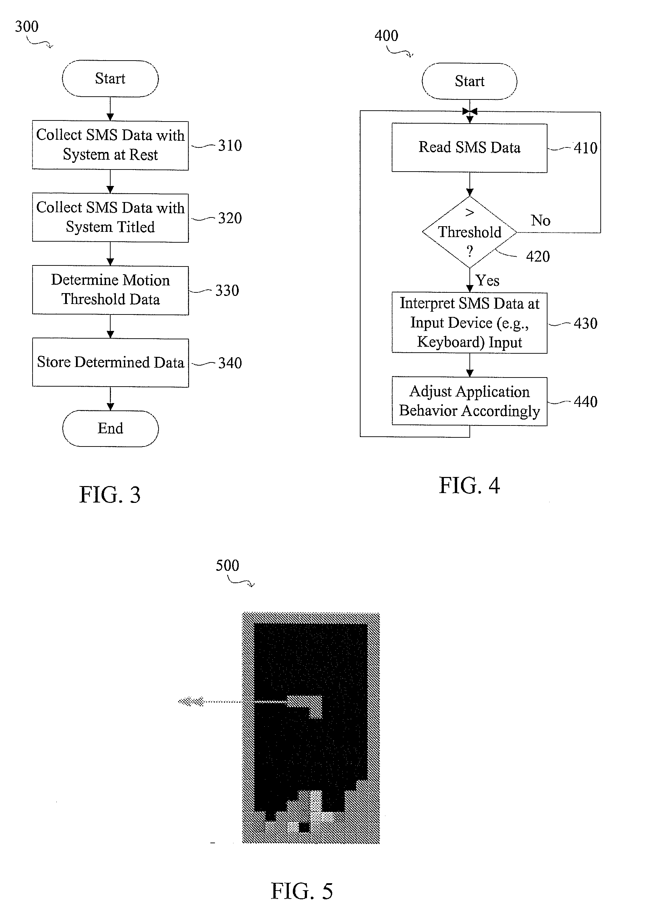

FIG. 3 is a flowchart illustrating a method 300 of generating SMS calibration and motion threshold data. First, SMS data is collected (310) with the system 100 at rest, e.g., placed on a stable non-moving surface. The system 100 is then tilted by a user and the resulting SMS data is collected (320). In an embodiment, the SMS data during the tilting to collect is determined by selecting a set of peak values during a time frame. In another embodiment, the SMS data to collect includes a peak value in any axis during a time frame. In another embodiment, the SMS data to collect include a minimum value from a peak set of values during a time frame In another embodiment, the Motion threshold data is then determined (330) by subtracting the SMS data when the system 100 is at rest from the SMS data during the tilt. This determined threshold data is then stored (340). In another embodiment, the threshold data stored (340) includes the set of peak values measured during the tilt. In another embodiment, the threshold data stored (340) include the set of peak values during the tilt minus a percentage (e.g., 10%). In another embodiment, the threshold data stored (340) is the SMS data collected when the system 100 is at rest.

FIG. 4 is a flowchart illustrating a method 400 of using SMS data as a substitute for keyboard input data. First, SMS data is read (410). It is then determined (420) if the read SMS data exceeds the threshold value previously stored (340). If the read SMS data does not exceed the threshold value (e.g., if any of the measured values in any axis docs not exceed a threshold value or if the set of measured values docs not exceed a set of threshold values, either independently or via a sum of values), then the method 400 returns to reading (410) the SMS data. In an embodiment, there can be a delay in reading (410) such that the reading (410) occurs at specific intervals, e.g. at about every 0.25 seconds.

If the read SMS data exceeds the threshold value previously stored (340), (e.g., if any of the measured values in any axis exceeds a threshold value or if the set of measured values exceeds a set of threshold values, either independently or via a sum of values), then the SMS data is interpreted (430) as input device input. Interpreting, in one embodiment, includes determining in which direction the system 100 was tilted. Application behavior is then adjusted (440) accordingly. Adjustment (440) includes, in one embodiment, game play that would not have other occurred absent the tilt. In a Tetris embodiment, for example, a tilt upwards of a left side of a device would be interpreted as pressing a right arrow key and then moving a block rightwards. In another embodiment, the tilt can be interpreted as moving a mouse rightwards, thereby moving a pointer rightwards. The extent of the rightwards movement is based on the extent of the tilt from the interpreting (430) in one embodiment. In another embodiment, the extent of adjusted movement of the pointer is constant regardless of extent of the impact. In an embodiment of the invention, if the extent of the tilt is greater than a maximum value, the data is not interpreted (430). The method 400 then returns to reading (410) the SMS data. The method 400 will continue to loop until application execution is finished.

FIG. 5 is a diagram illustrating a game 500 according to an embodiment of the invention. A tilting of the system 100 such that a right side is higher than a left side will be interpreted as a left arrow keyboard entry, thereby moving a block to the left. Conversely, tilting the system 100 such that a left side is higher than right side will be interpreted as a right arrow keyboard entry, thereby moving a block to the right.

The foregoing description of the illustrated embodiments of the present invention is by way of example only, and other variations and modifications of the above-described embodiments and methods are possible in light of the foregoing teaching. For example, while embodiments of the invention are described in reference to a MACINTOSH computer, any computer having a sudden motion sensor can implement embodiments of the invention. Further, while reference has been made to a keyboard, the SMS data can be used for replacement or additional input for any input device. Further, components of this invention may be implemented using a programmed general purpose digital computer, using application specific integrated circuits, or using a network of interconnected conventional components and circuits. Connections may be wired, wireless, modem, etc. The embodiments described herein are not intended to be exhaustive or limiting. The present invention is limited only by the following claims.

## Claims

1. A method, comprising:
reading sudden motion sensor data during tilting of a device;
interpreting the read data as input device input; and
adjusting application behavior based on the interpreted data.

2. The method of claim 1, wherein the adjusting adjusts application behavior in proportion to the read data values.

3. The method of claim 1, wherein the reading reads the data from a sudden motion sensor system used to park a head of a hard drive,

4. The method of claim 3, wherein the sudden motion sensor system includes a three-axis accelerometer.

5. The method of claim 4, wherein the adjusting adjusts application behavior if a value from any axis exceeds a threshold.

6. A system, comprising:
means for reading sudden motion sensor data during tilting of a device;
means for interpreting the read data as input device input; and
means for adjusting application behavior based on the interpreted data.

7. A system, comprising:
a sudden motion sensor engine for reading sudden motion sensor data during tilting of a device;
an input device driver, communicatively coupled to the sudden motion sensor engine, for interpreting the read data as input device data; and
an application, communicatively coupled to the input device driver, that adjusts behavior based on the interpreted data.

8. The system of claim 7, wherein the application adjusts behavior in proportion to the read data values.

9. The system of claim 7, wherein the sudden motion sensor engine reads the data from a sudden motion sensor system used to park a head of a hard drive,

10. The system of claim 9, wherein the sudden motion sensor system includes a three-axis accelerometer.

11. The system of claim 10, wherein the application adjusts its behavior if a value from any axis exceeds a threshold.

12. The method or system of claim 7 or 11, wherein the application includes a game.

13. The method or system of claim 7 or 11, wherein the device includes a MACINTOSH computer.

14. The method or system of claim 7 or 11, wherein the input device includes a keyboard.
